# EUROPÄISCHE PATENTANMELDUNG

(11) **EP 2 000 881 A1**
(43) Veröffentlichungstag der Anmeldung: **10.12.2008**
(21) Anmeldenummer: 07119971.5
(22) Anmeldetag: 05.11.2007
(51) Int. Cl.: G06F 1/32

(54) **Elektronisches Gerät aufweisend eine Energieverwaltungseinrichtung, Computersystem, Energiesparverfahren und Computerprogrammprodukt**

(30) Priorität: 04.06.2007 DE 102007025991
(71) Anmelder: Fujitsu Siemens Computers GmbH, 80807 München (DE)
(72) Erfinder: Steidle, Andreas, 86199, Augsburg (DE)
(74) Vertreter: Epping - Hermann - Fischer

(57) **Zusammenfassung**

Die Erfindung betrifft ein elektronisches Gerät (1) aufweisend eine Energieverwaltungseinrichtung (4), die dazu eingerichtet ist, einen Energiesparzustand (E) des elektronischen Gerätes (1) nach einer vorbestimmten Dauer (T) einer Nichtbenutzung zu aktivieren. Das elektronische Gerät (1) ist durch einen Sensor (6), der angibt, ob ein Benutzer vor dem elektronischen Gerät (1) anwesend ist, und eine Steuervorrichtung, die die Aktivierung des Energiesparzustandes (E) in Abhängigkeit der Anwesenheit unterdrückt, gekennzeichnet.

Die Erfindung betrifft außerdem ein Computersystem (8), ein Energiesparverfahren (30, 40) und ein Computerprogrammprodukt.

## Beschreibung

Die Erfindung betrifft ein elektronisches Gerät aufweisend eine Energieverwaltungseinrichtung, die dazu eingerichtet ist, einen Energiesparzustand des elektronischen Geräts nach einer vorbestimmten Dauer einer Nichtbenutzung zu aktivieren. Die Erfindung betrifft außerdem ein Computersystem, ein Energiesparverfahren und ein Computerprogrammprodukt.

Elektronische Geräte mit Energieverwaltungseinrichtungen der oben genannten Art sind vielfach bekannt. Insbesondere Hersteller von Computersystemen werden mit immer neuen Standards und Verordnungen zum Energiesparen konfrontiert. Beispielsweise sieht der so genannte Energy Star 4.0 Standard der US Environmetal Protection Agency (EPA) vor, dass ein Desktop-Computer der Kategorie A mit einem einzelnen Prozessor und weniger als einem Gigabyte Hauptspeicher eine Leistungsaufnahme von weniger als 50 Watt im Leerlauf aufweist.

Um diese und weitere Kriterien zu erfüllen, weisen elektronische Geräte oftmals einen oder mehrere so genannte Energiesparzustände auf, in denen zumindest Teile des Gerätes bei Nichtbenutzung abgeschaltet oder mit reduzierter Leistung betrieben werden. Insbesondere ist es bekannt, nach einer vorbestimmten Zeit ohne Benutzereingaben einen an das Gerät angeschlossenen Bildschirm abzuschalten und einen Prozessortakt zu reduzieren.

Ungeachtet der Vorteile derartiger Energiesparzustände kann ein solches Vorgehen jedoch auch zu einer Beeinträchtigung des Benutzerkomforts führen. Schaltet sich das elektronische Gerät nach kurzer Eingabepause in den Energiesparzustand, beispielsweise weil man Informationen aus einem Schriftstück heraussucht, muss das elektronische Gerät nachfolgend wieder in den Betriebszustand versetzt werden. Insbesondere bei Computersystemen ist es dabei üblich, dass beim Deaktivieren des Energiesparzustandes ein Benutzerpasswort oder eine ähnliche Authentifizierungsmaßnahme erneut durchgeführt werden muss.

Um den mit der Aktivierung des Energiesparzustandes verbundenen Aufwand zu vermeiden, schalten viele Benutzer derartige Energiesparmechanismen ganz ab, was letztlich dem verfolgten Zweck der Energieeinsparung zuwider läuft.

Aufgabe der vorliegenden Erfindung ist es, ein elektronisches Gerät und ein Computersystem zu beschreiben, das eine effektive Energieeinsparung erlaubt, ohne den Benutzerkomfort nachhaltig zu reduzieren.

Die Aufgabe wird durch ein elektronisches Gerät der oben genannten Art gelöst, das durch einen Sensor und eine Steuervorrichtung gekennzeichnet ist, wobei der Sensor dazu eingerichtet ist, ein Steuersignal bereitzustellen, das angibt, ob ein Benutzer vor dem elektronischen Gerät anwesend ist, und die Steuervorrichtung dazu eingerichtet ist, die Aktivierung des Energiesparzustandes zu unterdrücken, wenn das Steuersignal angibt, dass ein Benutzer vor dem elektronischen Gerät anwesend ist.

Durch Unterdrückung der Aktivierung des Energiesparzustandes bei Erkennung der Anwesenheit eines Benutzers vor dem elektronischen Gerät wird eine unnötige Aktivierung des Energiesparzustandes verhindert. Somit schaltet sich ein elektronisches Gerät solange nicht aus, wie sich ein Benutzer des elektronischen Gerätes davor aufhält.

Gemäß einer weiteren Ausgestaltung ist die Steuervorrichtung des Weiteren dazu eingerichtet, den Energiesparzustand schon vor Ablauf der vorbestimmten Dauer zu aktivieren, wenn das Steuersignal angibt, dass kein Benutzer vor dem elektronischen Gerät anwesend ist. Durch vorzeitige Aktivierung des Energiesparzustandes bei Abwesenheit eines Benutzers kann die Energieeffizienz des elektronischen Gerätes weiter gesteigert werden.

Gemäß einer weiteren Ausgestaltung überwacht der Sensor einen Nahbereich und einen Fernbereich vor dem elektronischen Gerät und stellt bei Anwesenheit einer Person in dem Nahbereich ein erstes Steuersignal bereit und bei Anwesenheit einer Person im Fernbereich ein zweites Steuersignal bereit. Durch Überwachung und Differenzierung zwischen einem Nahbereich und einem Fernbereich vor dem elektronischen Gerät kann die Aktivierung oder Deaktivierung des Energiesparzustandes noch besser an ein Benutzerverhalten oder eine Betriebssituation angepasst werden.

Die zugrunde liegende Aufgabe wird ebenso gelöst durch ein Computersystem umfassend ein Energieverwaltungsmodul, das dazu eingerichtet ist, einen Energiesparzustand des Computersystems nach einer vorbestimmten Dauer ohne eine Benutzereingabe zu aktivieren. Das Computersystem ist durch einen Sensor und ein Steuermodul gekennzeichnet, wobei der Sensor dazu eingerichtet ist, ein Steuersignal bereitzustellen, das angibt, ob ein Benutzer vor dem Computersystem anwesend ist, und das Steuermodul dazu eingerichtet ist, die Aktivierung des Energiesparzustandes zu unterdrücken, wenn das Steuersignal angibt, dass ein Benutzer vor dem Computersystem anwesend ist.

Durch den Sensor und das Steuermodul wird ein Energiesparzustand eines Computersystems nur dann aktiviert, wenn sich kein Benutzer mehr vor dem Computersystem befindet. Eine unnötige Aktivierung des Energiesparzustandes durch ein Energieverwaltungsmodul wird somit vermieden.

Gemäß einer weiteren Ausgestaltung ist das Computersystem durch ein Zugangsschutzmodul gekennzeichnet, das dazu eingerichtet ist, nach Aktivierung des Energiesparzustandes den Zugang zu dem Computersystem zu blockieren. Durch Aktivierung des Zugangsschutzes wird ein Ausspähen von Daten an einem verlassenen Arbeitsplatz verhindert.

Gemäß einer weiteren Ausgestaltung, ist der Sensor dazu eingerichtet, wenigstens ein biometrisches Merkmal zu erfassen, und das Steuermodul oder das Zugangschutzmodul ist dazu eingerichtet, das wenigstens eine biometrische Merkmal mit wenigstens einem gespeicherten Zugangsprofil zu vergleichen und den Zugang zu dem Computer freizugeben, wenn eine Übereinstimmung des erfassten Merkmals mit dem gespeicherten Zugangsprofil erkannt wird. Durch die zusätzliche Nutzung des Sensors zum Erfassen eines biometrischen Merkmals kann der Benutzerkomfort bei der ersten oder erneuten Aktivierung des Computersystems weiter erhöht werden. Insbesondere kann auf die Eingabe eines Passwortes durch den Benutzer verzichtet werden, wenn dieser anhand eines biometrischen Merkmales durch das Zugangsschutzmodul oder das Steuermodul authentifiziert wird.

Die zugrunde liegende Aufgabe wird auch durch ein Energiesparverfahren für ein elektronisches Gerät aufweisend einen Sensor sowie durch ein Computerprogrammprodukt mit ausführbaren Programmcode gelöst, das die folgenden Schritte umfasst:
- Erkennen, ob eine Benutzereingabe vorgenommen wird,
- Erkennen, ob durch den Sensor eine Anwesenheit eines Benutzers im Bereich des elektronisches Gerätes erkannt wird, und
- Schalten des elektronischen Gerätes in einen Energiesparzustand, wenn nach einer vorbestimmten Dauer weder eine Benutzereingabe noch eine Anwesenheit erkannt wurde.

Weitere vorteilhafte Ausgestaltungen der Erfindung sind in den Unteransprüchen angegeben.

Die Erfindung wird nachfolgend anhand von Ausführungsbeispielen unter Bezugnahme auf die Figuren näher erläutert.

In den Figuren zeigen:
- Figur 1: eine schematische Darstellung eines elektronischen Gerätes mit einer Energieverwaltungseinrichtung gemäß eines Ausführungsbeispiels,
- Figur 2A: eine schematische Darstellung eines Computersystems gemäß eines weiteren Ausführungsbeispiels,
- Figur 2B: eine schematische Darstellung einer Softwarearchitektur des Computersystems,
- Figur 3: ein Ablaufdiagramm einer Ausgestaltung eines Energiesparverfahrens und
- Figur 4: ein Ablaufdiagramm einer Ausgestaltung eines Energiesparverfahrens mit zusätzlichen Schritten zum Deaktivieren eines Zugangsschutzes.

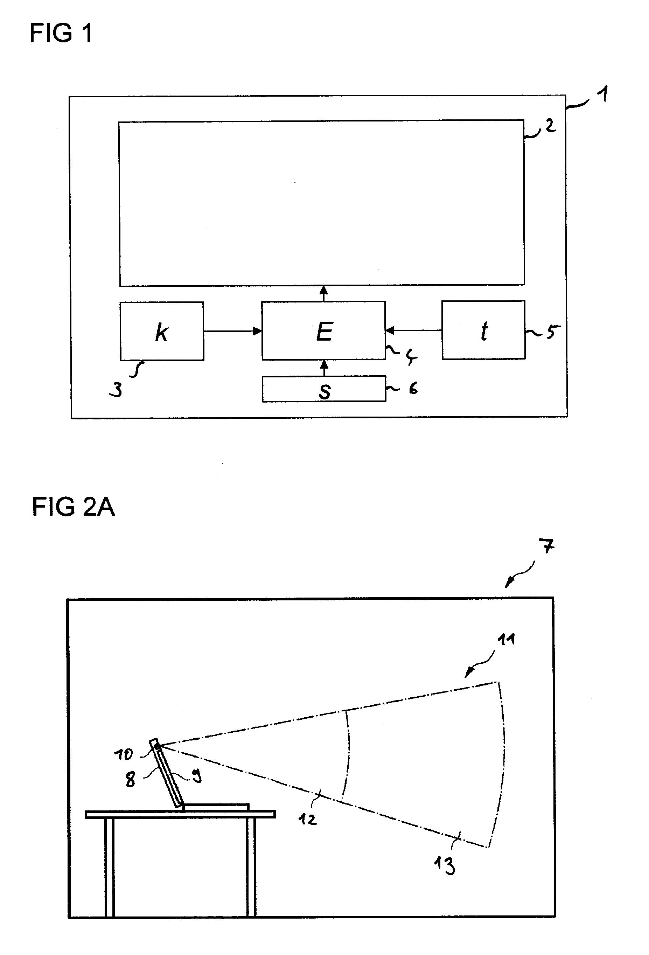

Figur 1 zeigt ein elektronisches Gerät 1. Bei dem elektronischen Gerät 1 handelt es sich beispielsweise um einen Geldautomaten oder um ein anderes Gerät mit Ein- und Ausgabemöglichkeiten. Das elektronische Gerät 1 umfasst eine Anzeige 2 und ein Eingabegerät 3. Bei der Anzeige 2 kann es sich beispielsweise um einen Röhrenbildschirm oder einen Flüssigkristallbildschirm handeln. Bei dem Eingabegerät 3 kann es sich beispielsweise um eine Tastatur, einzelne Tasten oder um ein Zeigegerät, beispielsweise eine Maus oder einen so genannten Trackball handeln. Es kann aber auch als berührungsempfindliche Schicht über der Anzeige 2 angeordnet sein. Das Eingabegerät 3 stellt ein Eingabesignal *k* bereit.

Das elektronische Gerät 1 umfasst des Weiteren eine Energieverwaltungsvorrichtung 4 und einen Zeitgeber 5. Die Energieverwaltungseinrichtung 4 ist dazu eingerichtet, nach einer vorbestimmten Dauer *T* der Nichtbenutzung das elektronische Gerät 1 in einen Energiesparzustand *E* zu versetzen. In dem Energiesparzustand *E* werden Teile des elektronischen Gerätes 1 abgeschaltet. Im Ausführungsbeispiel überwacht die Energieverwaltungseinrichtung 4 Eingaben eines Benutzers über das Eingabegerät 3 sowie eine von dem Zeitgeber 5 bereitgestellte Zeit *t*. Nimmt ein Benutzer innerhalb der vorbestimmten Zeitdauer *T* keine Eingabe vor, deaktiviert die Energieverwaltungseinrichtung 4 die Anzeige 2. Beispielsweise kann eine Hintergrundbeleuchtung einer LCD-Anzeige oder eine Ablenkelektronik eines Röhrenbildschirms deaktiviert werden.

Das elektronische Gerät 1 umfasst des Weiteren einen Sensor 6. Bei dem Sensor 6 handelt es sich im Ausführungsbeispiel um einen Infrarot-Bewegungssensor. Der Sensor 6 erzeugt ein Steuersignal *s* und stellt es einer in die Energieverwaltungseinrichtung 4 eingebauten Steuervorrichtung zur Verfügung. Das Steuersignal s zeigt an, ob sich eine Person vor dem elektronischen Gerät 1 aufhält. Solange das Steuersignal s anzeigt, dass sich eine Person vor dem elektronischen Gerät 1 aufhält, aktiviert die Energieverwaltungseinrichtung 4 nicht den zuvor beschriebenen Energiesparzustand *E*.

Auf diese Weise wird die Aktivierung des Energiesparzustandes E des elektronischen Gerätes 1 in dem Fall verhindert, in dem keine Eingabe über das Eingabegerät 3 vorgenommen wird, sich ein Benutzer aber noch vor dem elektronischen Gerät 1 aufhält. Dies kann beispielsweise der Fall sein, wenn ein Benutzer des elektronischen Gerätes 1 nach benötigten Eingaben wie beispielsweise einer Geheimnummer oder Kontonummer sucht. In diesem Fall wird eine angefangene Transaktion des Benutzers nicht unterbrochen, selbst wenn das Auffinden der benötigten Informationen länger als die vorbestimmte Zeitdauer *T* benötigt.

Gemäß einer vorteilhaften Ausgestaltung aktiviert die Energieverwaltungseinrichtung 4 den Energiesparzustand *E* sofort, wenn das Steuersignal *s* anzeigt, dass sich keine Person mehr vor dem elektronischen Gerät 1 aufhält. In diesem Fall wird nicht der Zeitablauf der vorbestimmten Zeitdauer *T* einer Nichtbenutzung abgewartet. Da das elektronische Gerät 1 in diesem Fall schneller in den Energiesparzustand *E* geschaltet wird, wird mehr Energie eingespart. Darüber hinaus stellt dieses Vorgehen insbesondere im Falle der beschriebenen Anwendung als Geldautomat ein zusätzliches Sicherheitsmerkmal dar. Persönliche und finanziell bedeutsame Informationen werden somit nicht länger auf der Anzeige 2 dargestellt, wenn ein Benutzer eine Transaktion durch Verlassen des elektronischen Gerätes 1 abbricht oder beendet.

Figur 2A zeigt einen Bildschirmarbeitsplatz 7 mit einem Computersystem 8. Im dargestellten Ausführungsbeispiel handelt es sich bei dem Computersystem 8 um einen tragbaren Computer, auch bekannt als Laptop oder Notebook. Das Computersystem 8 umfasst eine Anzeige 9, eine eingebaute Tastatur und eine eingebaute CCD-Kamera 10. Die Kamera 10 überwacht einen Benutzerbereich 11 der in einen Nahbereich 12 und in einen Fernbereich 13 unterteilt ist.

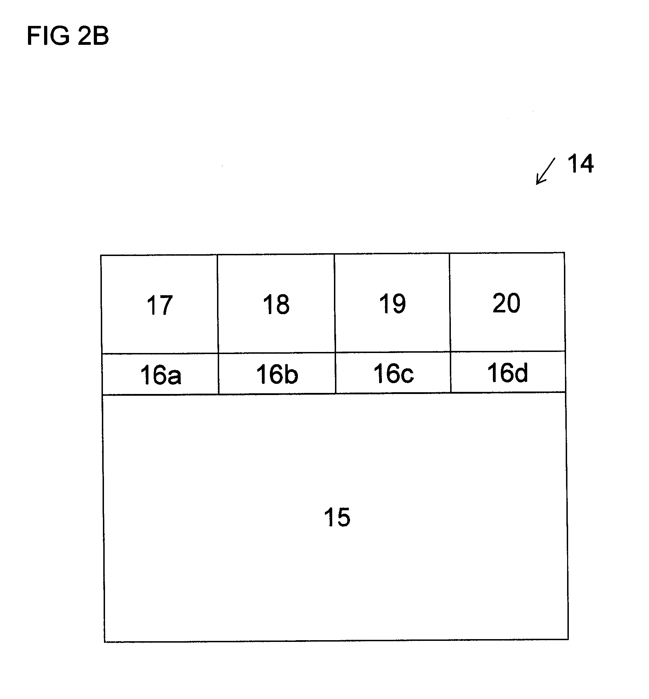

Figur 2B zeigt eine Architektur eines Computerprogramms 14, das zur Ausführung eines Energiesparverfahrens geeignet ist. Das Computerprogrammprodukt 14 umfasst ein Betriebssystem 15 mit vier Schnittstellen 16a, 16b, 16c und 16d. Über die erste Schnittstelle 16a können Energiemanagementfunktionen des Computersystems 8 aktiviert werden. Über die zweite Schnittstelle 16b kann ein Zugriffsschutzmechanismus des Computersystems 8 angesteuert werden. Über die dritte Schnittstelle 16c können Ein- und Ausgaben an und von dem Computersystem 8 bereitgestellt werden. Über die vierte Schnittstelle 16d können Funktionen des Betriebssystems 8 angesteuert werden.

Das Computerprogramm 14 umfasst des Weiteren ein Energieverwaltungsmodul 17, ein Zugangsschutzmodul 18, ein Auswertemodul 19 und ein Steuermodul 20. Bei den Modulen 17, 18, 19 und 20 handelt es sich beispielsweise um Softwarekomponente des Betriebssystems 15, zusätzliche Treibersoftware oder um eine Kombinationen von Hardware und Software. Beispielweise können BIOS-Einstellungen und -Routinen oder so genannte Firmware-Module verwendet werden. Selbstverständlich können die einzelnen Module miteinander kombiniert oder weiter aufgeteilt werden.

Das Energieverwaltungsmodul 17 steuert die Energieversorgung beziehungsweise einen Energiesparzustand E des Computersystems 8. Insbesondere dient es im Ausführungsbeispiel zur Aktivierung beziehungsweise Deaktivierung der Anzeige 9 und zur Drosselung eines Prozessors des Computersystems 8. Beispielsweise kann es sich dabei um einen Software-Treiber zur Ansteuerung des so genannten Advanced Configuration and Power Interface (ACPI) handeln.

Das Zugangsschutzmodul 18 überwacht den Zugang zu dem Computersystem 8. Beispielsweise kann das Zugangsschutzmodul 18 einen Zugangsschutz *Z* zu dem Computersystem 8 aktivieren, wenn ein Energiesparzustand *E* durch das Energieverwaltungsmodul 17 aktiviert wurde. Dabei wird die Art und Häufigkeit einer erforderlichen Benutzerauthentifizierung durch Einstellungen des Zugangsschutzmoduls 18 bestimmt.

Das Auswertemodul 19 ist dazu eingerichtet, Eingaben an das Computersystem, beispielsweise über eine eingebaute Tastatur oder ein anderes daran angeschlossenes Eingabegerät zu überwachen und ein dementsprechendes Eingabesignal *k* bereitzustellen. Darüber hinaus überwacht das Auswertemodul 19 in einer vorteilhaften Ausgestaltung die von der Kamera 10 bereitgestellten Bildinformationen auf Bewegungen und Gesten eines Benutzers.

Das Steuermodul 20 überwacht und verknüpft die verschiedenen Informationen und entscheidet, ob der Energiesparzustand *E* aktiviert werden soll oder nicht. Das Steuermodul 20 funktioniert ähnlich wie die oben beschriebene Steuervorrichtung der Energieverwaltungseinrichtung 4. Insbesondere berücksichtigt das Steuermodul 20 an dem Computersystem 8 vorgenommene Eingaben und durch die Kamera 10 bereitgestellte Bildinformationen. Die von der Kamera 10 bereitgestellten Bildinformationen können entweder durch die Kamera selbst oder zusätzliche Hard- oder Software ausgewertet werden, um eine Bewegung oder die Gegenwart eines Objektes in dem Benutzerbereich 11 zu erkennen und ein geeignetes Steuersignal *s* an das Steuermodul 20 bereitzustellen.

Mittels geeigneter Bilderkennungsmechanismen und Trainingsparameter kann die Kamera 10 zwischen dem Nahbereich 12 und dem Fernbereich 13 unterscheiden. Hält sich ein Benutzer in dem Nahbereich 12 vor dem Computersystem 8 auf, wird ein erstes Steuersignal an das Steuermodul 20 bereitgestellt. In einer optionalen Ausgestaltung wird ein zweites Steuersignal an das Energieverwaltungsmodul bereitgestellt, wenn sich ein Benutzer in dem Fernbereich 13 des Computersystems 8 aufhält. Hält sich kein Benutzer in dem Benutzerbereich 11 auf, wird kein Steuersignal oder ein anderes Steuersignal an das Steuermodul 20 übermittelt.

Das Steuermodul 20 berücksichtigt das Eingabesignal *k* des Auswertemoduls 19 des Computersystems 8. Darüber hinaus berücksichtigt es das von der Kamera 10 bereitgestellte Steuersignal *s*. Schließlich berücksichtigt es eine Zeit *t*, die entweder durch das Steuermodul 20 selber, das Betriebssystem 15 oder durch einen externen Zeitgeber bereitgestellt wird. Solange sich ein Benutzer in dem Nahbereich 12 aufhält, wird die Aktivierung des Energiesparzustandes *E* durch das Steuermodul 20 in jedem Fall verhindert. Sitzt ein Benutzer also unmittelbar vor dem Computersystem 8, nimmt jedoch keine Eingabe vor, weil er beispielsweise in einer Akte blättert, bleibt die Anzeige 9 stets eingeschaltet.

Bewegt er sich aus dem Nahbereich 12 in den Fernbereich 13, beispielsweise weil er einer anderen Tätigkeit innerhalb seines Büros nachgeht, bleibt die Anzeige 9 zunächst eingeschaltet. Nach Ablauf einer vorbestimmten Zeitdauer *T* ohne Eingabe oder Rückkehr des Benutzers in den Nahbereich 12 wird die Blockierung durch das Steuermodul 20 aufgehoben und ein vorbestimmter Energiesparzustand *E* durch das Energieverwaltungsmodul 17 aktiviert. Auf diese Weise kann die Leistungsaufnahme des Computersystems 8 bei längeren Arbeitspausen verringert werden.

Verlässt ein Benutzer schließlich den Benutzerbereich 11 vollständig, in dem er den Bildschirmarbeitsplatz 7 verlässt, schaltet das Energieverwaltungsmodul das Computersystem 8 ebenfalls in einen Energiesparzustand. Dabei kann es sich um denselben oder einen anderen Energiesparzustand wie oben beschrieben handeln. In Abhängigkeit einer vorbestimmten Konfiguration wird das Computersystem 8 in diesem Fall zum Beispiel vollständig ausgeschaltet oder zumindest in eine Betriebsart geschaltet, in dem ein Zugriffschutz *Z* des Computersystems 8 aktiviert wird. Ein erneutes Arbeiten mit dem Computersystem 8 ist dann nur möglich, wenn sich ein Benutzer gegenüber dem Computersystem 8 erneut authentifiziert.

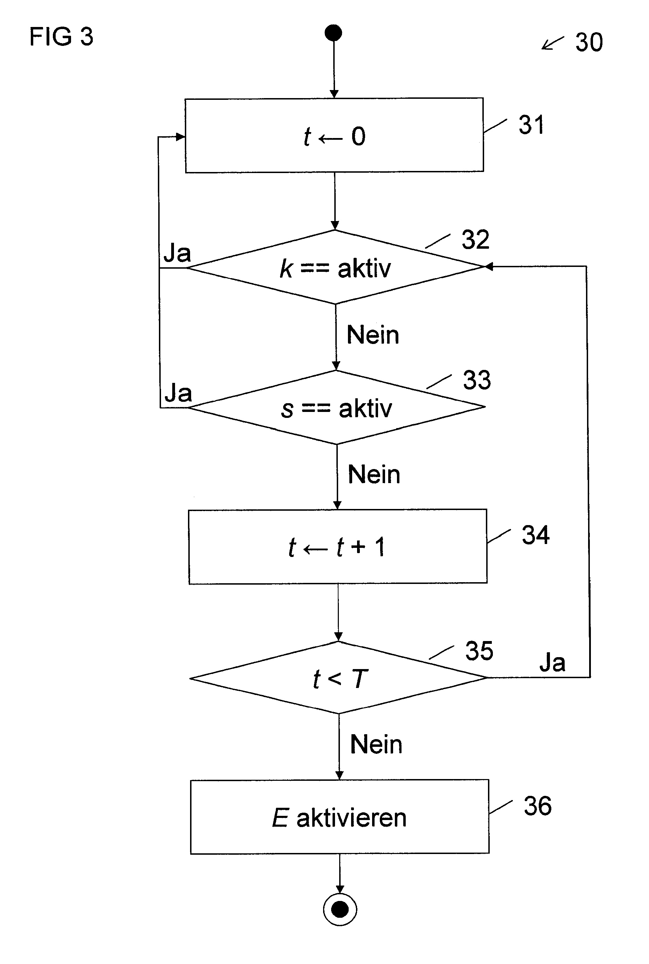

Figur 3 zeigt ein Ablaufdiagramm eines Energiesparverfahrens 30. Das Energiesparverfahren 30 eignet sich beispielsweise zur Ausführung durch die Energieverwaltungseinrichtung 4 oder durch das Steuermodul 20 gemäß den oben beschriebenen Ausgestaltungen. Im Folgenden wird es unter Bezugnahme auf das in der Figur 1 dargestellte System beschrieben.

In einem ersten Schritt 31 wird ein Zeitgeber 5 initialisiert. Beispielsweise wird ein Register, das eine aktuelle Zeit *t* enthält, auf den Wert 0 zurückgesetzt.

In einem Schritt 32 wird überprüft, ob eine Eingabe durch ein Eingabegerät 3 vorgenommen wurde. Wird ein Eingabesignal *k* erkannt, wird der Zeitgeber 5 im nachfolgenden Schritt 31 erneut initialisiert.

Wurde kein Eingabesignal *k* erkannt, wird im Schritt 33 überprüft, ob ein Steuersignal s angibt, dass sich ein Benutzer vor dem elektronischen Gerät 1 aufhält. Hält sich ein Benutzer vor dem elektronischen Gerät 1 auf, erzeugt der Sensor 6 ein geeignetes Steuersignal *s*. Auch in diesem Fall wird das Verfahren im Schritt 31 mit der Initialisierung des Zeitgebers 5 fortgesetzt.

Wird weder ein Eingabesignal *k* noch ein Steuersignal *s* erkannt, wird der Wert der Zeit *t* durch den Zeitgeber 5 erhöht. Dies findet im Schritt 34 statt.

Im Schritt 35 wird überprüft, ob die aktuelle Zeit t kleiner als eine vorbestimmte Zeitdauer *T* ist. Wurde die vorbestimmte Zeitdauer *T* noch nicht erreicht, wird das Verfahren im Schritt 32 fortgesetzt.

Ist die vorgegebene Zeitdauer *T* hingegen abgelaufen, ohne dass ein Eingabesignal *k* oder ein Steuersignal *s* erkannt wurde, wird im Schritt 36 ein Energiesparzustand *E* des elektronischen Gerätes 1 aktiviert. Beispielsweise kann im Schritt 36 eine Anzeige 2 deaktiviert werden.

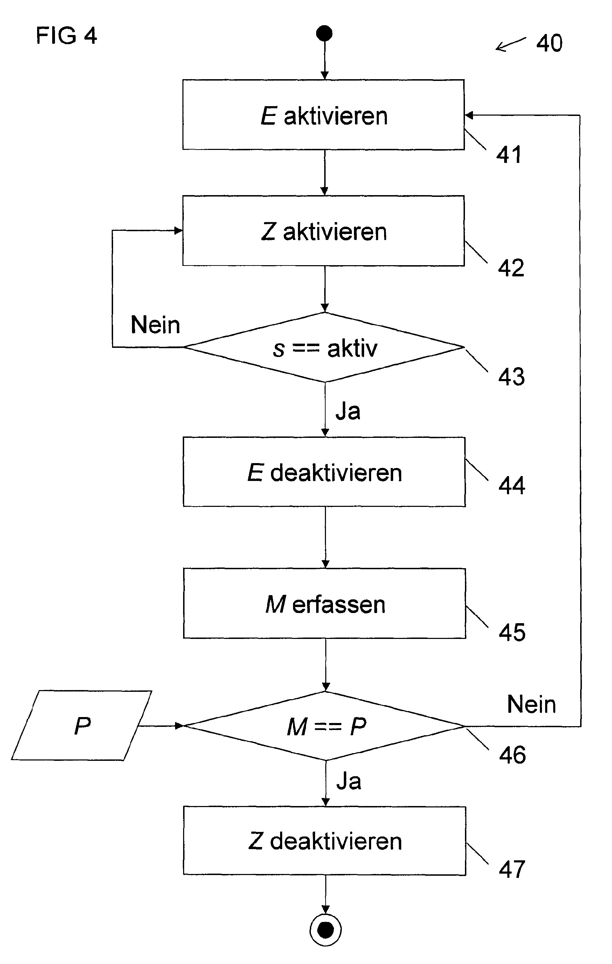

Figur 4 zeigt eine vorteilhafte Ausgestaltung eines Energiesparverfahrens 40 mit zusätzlichem Zugriffsschutzmechanismus. Es eignet sich insbesondere zur Ausführung auf dem Computersystem 8.

In dem in der Figur 4 dargestellten Verfahren 40 sind die einzelnen Verfahrensschritte zum Aktivieren des Energiesparzustandes *E* nicht dargestellt. In dem beschriebenen Ausführungsbeispiel wird das zuvor beschriebene Energiesparverfahren 30 zum Aktivieren des Energiesparzustandes *E* verwendet.

In dem Schritt 41 wird der Energiesparzustand *E* zunächst aktiviert. Beispielsweise kann eine Anzeige 9 des Computersystems 8 abgeschaltet werden und zugleich der Arbeitstakt eines Prozessors vermindert werden.

In einem Schritt 42 wird zudem ein Zugangsschutz *Z* des Computersystems 8 aktiviert. Der Zugangsschutz *Z* kann beispielsweise durch das Softwaremodul 18 oder durch eine andere Softwarekomponente des Betriebssystems 15 aktiviert werden. Es kann sich auch um ein Zugangsschutzsystem umfassend eine Kombination von Hard- und Software handeln. Durch die Aktivierung des Zugangsschutzes Z wird die Darstellung von Informationen auf der Anzeige 9 des Computersystems 8 verhindert. Eine erneute Benutzung des Computersystems 8 ist nur nach erfolgreicher Authentifizierung eines Benutzers möglich. Hierzu können beispielsweise in ein Betriebssystem eingebaute Authentifizierungsmechanismen, wie etwa eine Passworteingabe, genutzt werden.

In einem Schritt 43 wird überprüft, ob ein Steuersignal *s* anzeigt, dass sich eine Person vor dem Computersystem 8 aufhält. Ist dies nicht der Fall, bleibt der Zugangsschutz *Z* aktiv und das Verfahren wird im Schritt 42 fortgesetzt.

Befindet sich jedoch eine Person vor dem Computersystem 8, wird der Energiesparzustand *E* im Schritt 44 deaktiviert. Beispielsweise kann ein Prozessor aus einem so genannten Schlafzustand aufgeweckt werden, um das Steuersignal *s* oder weitere Daten, die von der Kamera 10 erfasst werden, auszuwerten.

In einem Schritt 45 werden biometrische Daten durch die Kamera 10 oder einen anderen geeigneten Sensor erfasst. Beispielsweise können biometrische Merkmale *M* eines durch die Kamera 10 erkannten Gesichtes analysiert werden.

In einem Schritt 46 werden die erfassten biometrischen Merkmale *M* mit einem gespeicherten Zugangsprofil *P* verglichen. Ein solches Zugangsprofil *P* kann beispielsweise in einem zentralen Authentifizierungsserver oder lokal auf einem Speichermedium des Computersystems 8 abgelegt sein.

Wird in dem Schritt 46 eine hinreichend große Übereinstimmung zwischen den erfassten biometrischen Merkmalen *M* und dem hinterlegten Zugangsprofil *P* erkannt, wird in einem Schritt 47 der Zugangsschutz *Z* deaktiviert.

In dem beschriebenen Ausführungsbeispiel dient die Erkennung von biometrischen Merkmalen *M* als Passwortersatz. Somit kann das Computersystem 8 allein durch Annäherung eines registrierten Benutzers in den Benutzerbereich 11 aus dem Energiesparzustand *E* aufgeweckt werden und eine Authentifizierung des Benutzers gegenüber dem Zugangsschutzmodul 18 vorgenommen werden. Ein manuelles Aufwecken und Authentifizieren durch Eingabe eines Passwortes wird somit nicht benötigt, was den Benutzerkomfort weiter erhöht.

Wurde im Schritt 46 keine hinreichend große Übereinstimmung zwischen dem erkannten biometrischen Merkmal und dem Zugangsprofil *P* erkannt, wird das Verfahren im Schritt 41 fortgesetzt, in dem der Energiesparzustand *E* erneut aktiviert wird.

Durch die oben beschriebenen Verfahren zum Energiesparen und Aktivieren beziehungsweise Deaktivieren eines Zugangsschutzes *Z* anhand von Sensordaten, wie sie beispielsweise die eingebaute Kamera 10 des Computersystems 8 bereitstellt, kann die Benutzung des Computersystems 8 komfortabler gestaltet werden. Die von der Kamera 10 bereitgestellten Daten können des Weiteren zur Bereitstellung weiterer Komfortfunktionen Verwendung finden. Beispielsweise ist es möglich, durch eine Verfolgung von Objekten beziehungsweise Personen einfache Gesten eines Benutzers zu erkennen. Auf diese Weise kann eine Steuerung des Computersystems 8 weiter vereinfacht werden, in dem auf Maus- oder Tastatureingaben in bestimmten Situationen verzichten werden kann.

Die oben beschriebenen Vorrichtungen und Verfahren können in einer Vielzahl von Anwendungen Verwendung finden. Beispielsweise eignen sie sich für Geräte der digitalen Unterhaltungselektronik, die zugleich ein komfortables Benutzerinterface und effiziente Energiesparmechanismen zur Verfügung stellen sollen. So kann ein Fernseher deaktiviert werden, wenn eine Person den Raum, in dem der Fernseher aufgestellt ist, verlässt und ihn für eine vorbestimmte Zeitdauer *T* nicht wieder betritt. Alternativ oder zusätzlich kann auch die Wiedergabe eines Filmes durch einen Videorekorder oder DVD-Player unterbrochen werden. Diese und weitere Energiespar- und Komfortfunktionen können durch die Verwendung eines Sensors, der ein Steuersignal *s* bezüglich der Anwesenheit eines Benutzers vor einem elektronischen Gerät bereitstellt, implementiert werden. Auch eine Steuerung der Geräte durch Gesten ist bei einer Kameraüberwachung des Benutzers möglich.

Anstelle der Kamera 10 können eine Vielzahl anderer Sensortypen zur Benutzererkennung Verwendung finden. Beispielsweise eignen sich hierzu Infrarot-Bewegungsmelder, Lichtschranken, in einen Auflage- oder Sitzfläche integrierte kapazitive oder Drucksensoren. Insbesondere in der Kombination mit dem beschriebenen Zugangsschutzmechanismus können auch so genannte Radio Frequency Identification (RFID) Systeme zur Überwachung verwendet werden. In diesem Fall wird ein Benutzer, der ein so genanntes RFID-Tag mit sich führt, durch eine RFID-Lesevorrichtung erkannt, sobald er sich an diese annähert.

### Bezugszeichenliste

- 1: elektronisches Gerät
- 2: Anzeige
- 3: Eingabegerät
- 4: Energieverwaltungseinrichtung
- 5: Zeitgeber
- 6: Sensor
- 7: Bildschirmarbeitsplatz
- 8: Computersystem
- 9: Anzeige
- 10: Kamera
- 11: Benutzerbereich
- 12: Nahbereich
- 13: Fernbereich
- 14: Computerprogramm
- 15: Betriebssystem
- 16: Schnittstelle
- 17: Energieverwaltungsmodul
- 18: Zugangsschutzmodul
- 19: Auswertemodul
- 20: Steuermodul

- 30: Energiesparverfahren
- 31 - 36: Verfahrensschritte

- 40: Energiesparverfahren
- 41 - 47: Verfahrensschritte

## Patentansprüche

1. Elektronisches Gerät (1) aufweisend eine Energieverwaltungseinrichtung (4), die dazu eingerichtet ist, einen Energiesparzustand (*E*) des elektronischen Geräts (1) nach einer vorbestimmten Dauer (*T*) einer Nichtbenutzung zu aktivieren,
**gekennzeichnet durch**
einen Sensor (6), der dazu eingerichtet ist, ein Steuersignal (s) bereitzustellen, das angibt, ob ein Benutzer vor dem elektronischen Gerät (1) anwesend ist, und
eine Steuervorrichtung, die dazu eingerichtet ist, die Aktivierung des Energiesparzustandes (*E*) zu unterdrücken, wenn das Steuersignal (*s*) angibt, dass ein Benutzer vor dem elektronischen Gerät (1) anwesend ist.

2. Elektronisches Gerät (1) nach Anspruch 1,
**dadurch gekennzeichnet, dass**
die Steuervorrichtung des Weiteren dazu eingerichtet ist, den Energiesparzustand (*E*) schon vor Ablauf der vorbestimmten Dauer (*T*) zu aktivieren, wenn das Steuersignal (*s*) angibt, dass kein Benutzer vor dem elektronischen Gerät (1) anwesend ist.

3. Elektronisches Gerät (1) nach Anspruch 1 oder 2,
**dadurch gekennzeichnet, dass**
der Sensor (6) einen Nahbereich (12) und einen Fernbereich (13) vor dem elektronischen Gerät (1) überwacht und bei Anwesenheit einer Person in dem Nahbereich (12) ein erstes Steuersignal bereitstellt und bei Anwesenheit einer Person in dem Fernbereich (13) ein zweites Steuersignal an die Steuervorrichtung bereitstellt.

4. Elektronisches Gerät (1) nach einem der Ansprüche 1 bis 3,
**dadurch gekennzeichnet, dass**
der Sensor (6) als CCD-Kamera (10), Bewegungsmelder, Lichtschranke, Infrarotsensor, Drucksensor oder als RFID-Lesegerät ausgebildet ist.

5. Computersystem (8) umfassend ein Energieverwaltungsmodul (17), das dazu eingerichtet ist, einen Energiesparzustand (*E*) des Computersystems nach einer vorbestimmten Dauer (*T*) ohne eine Benutzereingabe zu aktivieren,
**gekennzeichnet durch**
einen Sensor (6), der dazu eingerichtet ist, ein Steuersignal (*s*) bereitzustellen, das angibt, ob ein Benutzer vor dem Computersystem (8) anwesend ist und
ein Steuermodul (20), das dazu eingerichtet ist, die Aktivierung des Energiesparzustandes (*E*) zu unterdrücken, wenn das Steuersignal (*s*) angibt, dass ein Benutzer vor dem Computersystem (8) anwesend ist.

6. Computersystem (8) nach Anspruch 5, **gekennzeichnet durch** ein Zugangsschutzmodul (18), das dazu eingerichtet ist, nach Aktivierung des Energiesparzustandes (*E*) den Zugang zu dem Computersystem (8) zu blockieren.

7. Computersystem (8) nach Anspruch 6,
**dadurch gekennzeichnet, dass**
der Sensor (6) dazu eingerichtet ist, wenigstens ein biometrisches Merkmal (*M*) zu erfassen, und das Steuermodul (20) oder das Zugangsschutzmodul (18) dazu eingerichtet ist, das wenigstens eine biometrische Merkmal (*M*) mit wenigstens einem gespeicherten Zugangsprofil (*P*) zu vergleichen und den Zugang zu dem Computersystem (8) freizugeben, wenn eine Übereinstimmung des erfassten Merkmales (*M*) mit dem gespeicherten Zugangsprofil (*P*) erkannt wird.

8. Computersystem (8) nach einem der Ansprüche 5 bis 7,
**dadurch gekennzeichnet, dass**
in einem Betriebszustand des Computersystems (8) das von dem Sensor (6) erfasste Steuersignal (*s*) wenigstens einem Auswertemodul (19) bereitgestellt wird.

9. Computersystem (8) nach Anspruch 8,
**dadurch gekennzeichnet, dass**
das Auswertemodul (19) dazu eingerichtet ist, Gesten eines Benutzers durch den Sensor (6) zu erfassen und in Abhängigkeit der erfassten Gesten Befehle auf dem Computersystem (8) auszuführen.

10. Computersystem (8) nach einem der Ansprüche 5 bis 9,
**dadurch gekennzeichnet, dass**
der Sensor (6) als eingebaute CCD-Kamera (10) ausgestaltet ist.

11. Energiesparverfahren (30, 40) für eine elektronisches Gerät (1) aufweisend einen Sensor (6), umfassend:
- Erkennen, ob eine Benutzereingabe vorgenommen wird,
- Erkennen, ob durch den Sensor (6) eine Anwesenheit eines Benutzers im Bereich des elektronisches Geräts (1) erkannt wird und
- Schalten des elektronischen Geräts (1) in einen Energiesparzustand (*E*), wenn nach einer vorbestimmten Dauer (*T*) weder eine Benutzereingabe noch eine Anwesenheit des Benutzers erkannt wurde.

12. Computerprogrammprodukt mit ausführbarem Programmcode, wobei beim Ausführen des Programmcodes auf einem Computersystem (8) ein Energiesparverfahren (30, 40) nach Anspruch 11 durchgeführt wird.
